# EUROPEAN PATENT APPLICATION

(11) **EP 4 465 515 A1**
(43) Date of publication of application: **20.11.2024**
(21) Application number: 23173915.2
(22) Date of filing: 17.05.2023
(51) Int. Cl.: H02M 3/335, H01F 27/00, H02M 7/49

(54) **MULIPORT ACTIVE BRIDGE (MAB) CONVERTER WITH EQUALIZED LEAKAGE INDUCTANCES**

(71) Applicant: Hitachi Energy Ltd, 8050 Zürich (CH)
(72) Inventor: MOGOROVIC, Marko, 1205 Geneva (CH); GRADINGER, Thomas, 5032 Aarau Rohr (CH); ZUEGER, Harry, 1219 Chatelaine/Genève (CH)
(74) Representative: Vossius & Partner Patentanwälte Rechtsanwälte mbB

(57) **Abstract**

The invention provides Converter system comprising: a first primary-side bridge; a first secondary-side bridge; a second secondary-side bridge; and a transformer with a first winding pair comprising a first primary-side winding and a first secondary-side winding, and a second winding pair comprising a second primary-side winding and a second secondary-side winding. The first primary-side winding and the second primary-side winding are connected in parallel with the first primary-side bridge. The first secondary-side winding is connected to the first secondary-side bridge. The second secondary-side winding is connected to the second secondary-side bridge.

## Description

The present disclosure relates to a converter system, a solid-state transformer (SST), and a method of producing the converter system.

In converter systems comprising a transformer with multiple primary-side windings and multiple secondary-side windings, there can be various kinds of disadvantages. The converter systems can be expensive. Also, a need for more insulation can make the converter bigger and heavier, which is also disadvantageous and a cost factor. Also, converter systems can be inefficient, for example by having a bad inductance or by having different phase shifts in different windings. Also, systems with multiple converters are more complicated, need more wiring, more insulation, and are more expensive, besides other disadvantages.

The above-mentioned disadvantages are at least partly overcome with the features of the independent claims. Dependent claims define preferred embodiments of the invention.

In particular, the present disclosure relates to a converter system comprising: a first primary-side bridge; a first secondary-side bridge; a second secondary-side bridge; and a transformer with a first winding pair comprising a first primary-side winding and a first secondary-side winding, and a second winding pair comprising a second primary-side winding and a second secondary-side winding. The first primary-side winding and the second primary-side winding are connected in parallel with the first primary-side bridge. The first secondary-side winding is connected to the first secondary-side bridge. The second secondary-side winding is connected to the second secondary-side bridge.

Preferably, the windings (first and second primary-side windings, and first and second secondary-side windings) are all wound around the same core of the transformer. This saves cost by implementing one transformer in total, instead of one (different) transformer for each winding pair. These corresponding different transformers might even have different designs, which makes assembly even more complicated and expensive. Thus, the easy assembly is another advantage of the above-mentioned converter system.

The use of one single first primary-side bridge for all primary-side windings saves material compared to a system with a bridge for each primary-side winding.

It is possible that there are more than two winding pairs, and more than two secondary-side bridges. The additional winding pairs (third winding pair and so on) may also be wound around the same core and the additional primary-side windings may also be connected in parallel with the first primary-side bridge. The additional secondary-side windings may be connected to a corresponding one of the additional secondary-side bridges.

Various embodiments may preferably implement the following features.

Preferably, a distance between a center of the first primary-side winding and a center of the first secondary-side winding is smaller than a distance between a center of the second primary-side winding and the center of the first secondary-side winding.

The term center mentioned in the preceding paragraph may be a center of current density of the corresponding winding, or a center of gravity, or a geometrical center, or the like.

The pair-wise arrangement of the windings of each winding pair together with the short distance (or no distance) between centers of the corresponding windings of a winding pair reduces leakage inductance, by equalizing (minimizing the difference of) the leakage inductance between the winding pairs. Also, this enables that there is substantially no phase shift between the outputs of the secondary-side windings (especially for the exemplary case of a multiport-active bridge (MAB) converter). This allows to draw the same power and current from each secondary-side winding. The phase shift between winding pairs is also minimized by the parallel connection of the primary-side windings with the first primary-side bridge. This also improves efficiency.

The centers may also coincide when the corresponding windings have (very) different radii. The radii of the corresponding windings can be as close together as the material (windings, insulation, and so on) allows. The radius of the inner winding of the corresponding windings can be as small as the material allows. Smaller radii and radii which are closer together reduce leakage inductance. Also, the corresponding windings can be as close together as the material allows. Besides the radii, this may also include minimizing (or setting equal) the axial positions along a leg of a core of the transformer.

The converter system may be a MAB converter.

Preferably, the first winding pair is positioned in an axial direction relative to the second winding pair, wherein the axial direction extends along a leg of a core of the transformer.

Preferably, an insulation distance between the first winding pair and the second winding pair in the axial direction is smaller than an insulation distance between the first secondary-side winding and the core of the transformer, and/or smaller than an insulation distance between the first primary-side winding and the first secondary-side winding.

Here electrical insulation is meant. If the input or output is high voltage (HV), and the other of the input and output is low voltage (LV), the windings of the HV side (maybe secondary-side) may be outside of the windings of the LV side (maybe primary-side; maybe in the concentrical arrangement described further below), and the insulation distance between the winding pairs may be smaller than an insulation distance between the windings of the HV side and the core leg. HV might also be medium voltage (MV) instead.

Besides the common definitions, MV may comprise voltages of 1.5 kV to 50 kV (35 kV rms AC voltage or, equivalently, 50 kV DC voltage). It is also possible that LV comprises up to 1.5 kV and HV comprises 1.5 kV and above.

The smaller insulation distance between the first winding pair and the second winding pair allows the core window to be smaller, thus leading to a smaller transformer, thus leading to a smaller converter system.

Preferably, an insulation between the first winding pair and the second winding pair in the axial direction is smaller than an insulation between the first secondary-side winding and the core of the transformer, and/or smaller than an insulation between the first primary-side winding and the first secondary-side winding.

In this case the (electrical) insulation may come from an insulation distance or from an insulation material with different resistivity. In this manner, it is possible that the insulation material between the first winding pair and the second winding pair in the axial direction has a higher resistivity than an insulation material between the first secondary-side winding and the core of the transformer, and/or than an insulation material between the first primary-side winding and the first secondary-side winding. It is also possible that the difference in insulation is achieved by both criteria: insulation distance and insulation material (resistivity).

This reduction in insulation is possible because of the single core in the single transformer with several windings.

Preferably, the first primary-side winding and the first secondary-side winding are concentrically arranged around a same first position along an axis of a core of the transformer, and wherein the second primary-side winding and the second secondary-side winding are concentrically arranged around a same second position along the axis of the core of the transformer, wherein the axis extends along a leg of the core of the transformer.

Preferably, the converter system further comprises an inductor and/or capacitor connected in series with the first primary-side winding or the first secondary-side winding. There may also be no further inductor and/or capacitor connected between a winding and the corresponding bridge. This also includes inductors and/or capacitors in form of discrete, physical components.

Preferably, the first winding pair substantially corresponds to the second winding pair in winding sense, numberof turns, relative position between each primary-side winding and the corresponding secondary-side winding, and current running through the first primary-side winding and the second primary-side winding.

The different voltage pairs can be configured to have similar voltages. This may reduce insulation requirements.

Preferably, the first winding pair also substantially corresponds to the second winding pair in some of the above-mentioned criteria and differ in the other of the above-mentioned criteria.

In this disclosure, the term "substantially", as mentioned above, may mean with a deviation of 10%, or 5%, or 1%, or the like.

Preferably, the converter system further comprises: a second primary-side bridge; another first primary-side winding comprised by the first winding pair; and another second primary-side winding comprised by the second winding pair. The other first primary-side winding and the other second primary-side winding may be connected in parallel with the second primary-side bridge.

Preferably, in the converter system with the other first primary-side winding and the other second primary-side winding, the first and second winding pair may also be called first and second winding set or first and second winding group. Even though the term "pair" might not be perfectly fitting anymore (as three windings are comprised), the term is maintained for consistency purposes without restricting the disclosure to the literal meaning of it.

Preferably, conductors of the first primary-side winding and the other first primary-side winding are interleaved.

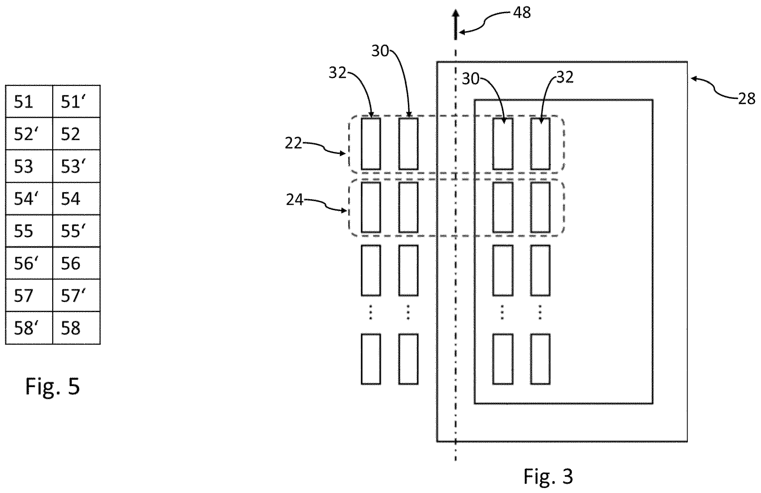

The term conductors, mentioned above, may also be exchanged with the term turns. The way the conductors/turns are interleaved may be physically, geometrically, or different. One possibility is shown in Fig. 5 (further described below).

Preferably, a connection of a direct current (DC) side of the first secondary-side bridge and second secondary-side bridge is in medium voltage direct current (MVDC) and a connection of a DC side of the (first and/or second) primary-side bridge is in low voltage direct current (LVDC).

The just mentioned setting provides a DC to DC converter (system).

Preferably, the first secondary-side bridge is connected to a first direct current/alternating current (DC/AC) converter, and the second secondary-side bridge is connected to a second DC/AC converter, wherein the first DC/AC converter and the second DC/AC converter are connected in series.

This setup provides a DC to AC (alternating current = AC) converter (system) (DC/AC converter means the same as DC to AC converter). It is in a way an input-parallel, output-series (IPOS) converter system (when the primary-side is seen as an input side and the secondary-side as an output side). This is because the primary-side windings are connected in parallel and the DC/AC converter are connected in series.

The transformer may be a medium-frequency transformer (MFT).

Using an MFT and operating at medium frequencies (for example at several kHz) enables to reduce size, cost and weight of the transformer compared to other transformers (for example operating at around 50 or 60 Hz).

Preferably, the transformer is a three-phase transformer.

Preferably, the first secondary-side bridge and the second secondary-side bridge are connected in series on a direct current (DC) side of the first secondary-side bridge and the second secondary-side bridge.

The present disclosure also relates to a solid-state transformer (SST) in input-series output-parallel (ISOP) configuration or input-parallel output-series (IPOS) configuration comprising the converter system as described above.

The present disclosure also relates to a method of producing a converter system, the method comprising: providing a first primary-side bridge; providing a first secondary-side bridge; providing a second secondary-side bridge; and providing a transformer with a first winding pair comprising a first primary-side winding and a first secondary-side winding, and a second winding pair comprising a second primary-side winding and a second secondary-side winding. The first primary-side winding and the second primary-side winding are connected in parallel with the first primary-side bridge. The first secondary-side winding is connected to the first secondary-side bridge. The second secondary-side winding is connected to the second secondary-side bridge.

This method may produce a converter system and/or an SST as described before.

The described advantages of the aspects are neither limiting nor exclusive to the respective aspects. An aspect might have more advantages, not explicitly mentioned.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.
Fig. 1 is a schematic illustration according to an embodiment of the converter system.
Fig. 2 is a schematic illustration according to an aspect of the converter system.
Fig. 3 is a schematic illustration according to an aspect of a winding arrangement of the converter system.
Figs. 4A and 4B show a schematic illustration according to another aspect of the converter system.
Fig. 5 is a schematic illustration according to an aspect of how the windings can be interleaved.
Fig. 6 is a schematic illustration according to an aspect of the converter system.
Fig. 7 is a schematic illustration according to an aspect of the converter system.
Fig. 8 is a schematic illustration according to an aspect of the converter system.
Fig. 9 is a flow chart of a method according to an embodiment of the present disclosure.

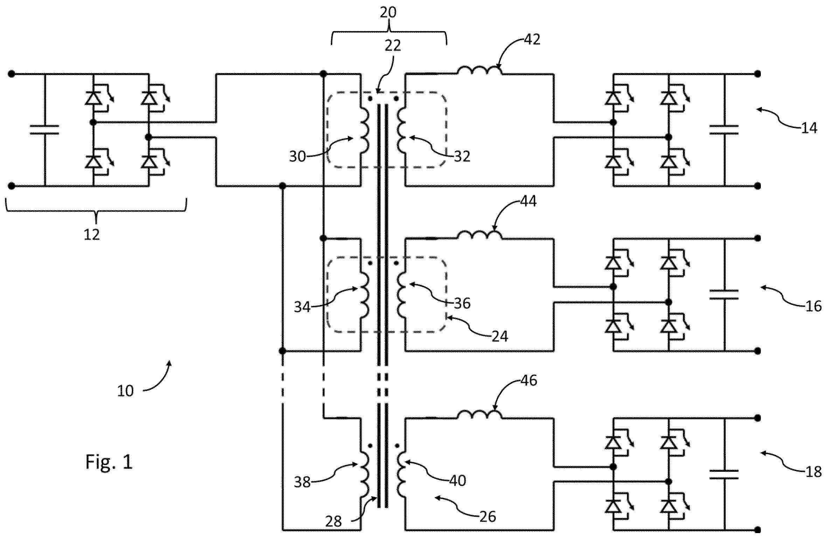

Fig. 1 is a schematic illustration according to an embodiment of the converter system 10. The converter system 10 comprises a (first) primary-side bridge 12, a first secondary-side bridge 14, a second secondary-side bridge 16, and an n-th secondary-side bridge 18. The converter system 10 further comprises a transformer 20. The transformer 20 comprises a first winding pair 22, a second winding pair 24, an n-th winding pair 26, and a core 28. Each winding pair comprises a primary-side winding and a secondary winding (the first winding pair 22 comprises a first primary-side winding 30 and a first secondary-side winding 32; the second winding pair 24 comprises a second primary-side winding 34 and a second secondary-side winding 36; and the n-th winding pair 26 comprises an n-th primary-side winding 38 and an n-th secondary-side winding 40). The first winding pair 22 and the second winding pair 24 are shown by a dashed line surrounding the corresponding primary-side winding and secondary-side winding comprised by the winding pair.

The converter system 10 may comprise further winding pairs and further secondary-side bridges arranged in a similar manner, shown by the dashed lines between the second winding pair 24 and the n-th winding pair 26.

It can be seen that the first primary-side winding 30 to the n-th primary-side winding 38 (including the second primary-side winding 34 and possible further primary-side windings) are connected in parallel with the first primary-side bridge 12. It can also be seen that the first secondary-side winding 32 is connected to the first secondary-side bridge 14, the second secondary-side winding 36 is connected to the second secondary-side bridge 16, and the n-th secondary-side winding 40 is connected to the n-th secondary-side bridge 18. Possible further secondary side windings and further secondary-side bridges (as mentioned above) may be connected in a similar manner.

It can be seen that there is one core 28 for all winding pairs (22, 24, 26). There are winding sense dots at the top of each winding. It is also possible that the winding sense is opposite to the winding sense shown.

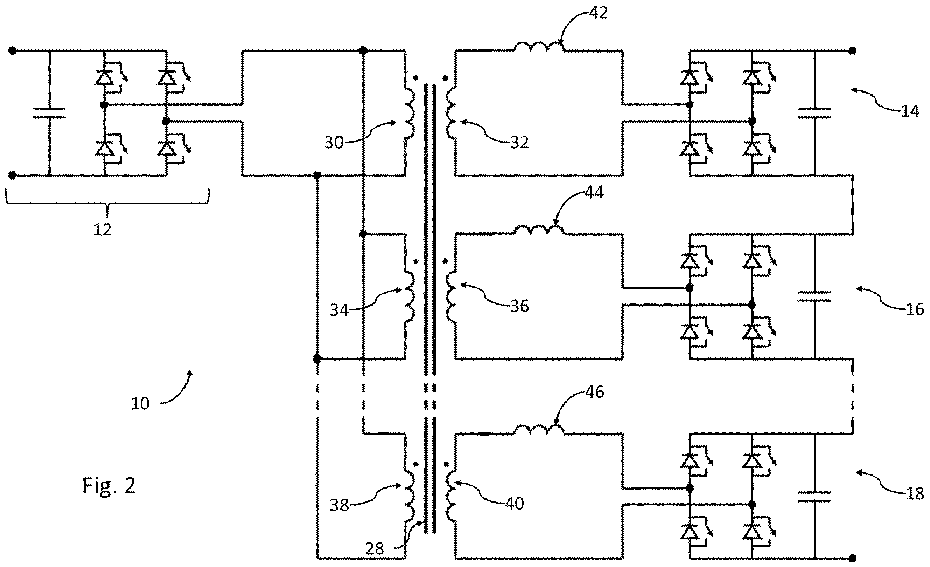

The primary-side bridge 12 and the secondary-side bridges (14, 16, 18) may be full-bridges. Each of the bridges comprises, in the embodiment of Fig. 1, a capacitor and four switches (may be transistors or other). Each of the bridges may function as a AC to DC converter or as a DC to AC converter. It is also possible to use other AC to DC converters and/or other DC to AC converters. The DC to AC converter may put out an AC signal with a sinus form, a square wave pulse form, a chain saw form, a triangular form, or another form. On the left side of the primary-side bridge 12, two connections can be seen. This connection may be connected to a DC source or consumer. In a similar way, the connections on the right side of the secondary-side bridges may be connected to a or multiple DC consumers, or one or multiple DC sources. One example is also shown Fig. 2.

The switches in the bridges (12, 14, 16, 18) may be controlled by signals to implement the DC to AC conversion or the AC to DC conversion, correspondingly.

The converter system 10 as shown in Fig. 1 is a DC to DC converter. It is possibly bidirectional. In one embodiment the converter system 10 may be a LV to HV converter. In this case the primary side (with the parts containing "primary" in the name) may be the LV side, and the secondary side (with the parts containing "secondary" in the name) may be the HV side. It may also be that the HV side is a MV side instead.

In Fig. 1, the converter system 10 further comprises inductors. Each inductor (42, 44, or 46) is coupled in series with the corresponding secondary-side winding (42 coupled to 32, 44 to 36, and 46 to 40). These inductors 42, 44, and 46 are optional. The inductors 42, 44, and 46 can alternatively represent parasitic inductances of the transformer. Alternatively or additionally (for example in series) to the inductors, there could be a capacitor. Such a capacitor and/or inductor could also be on the primary side of the winding (also connected in series with each primary-side winding). Also other kinds of resonant converters are possible (series-resonant converter (SRC), inductor-inductor-capacitor (LLC) resonant converter).

Fig. 2 is a schematic illustration according to an aspect of the converter system 10. It is largely similar to the converter system 10 of Fig. 1. Similarities are therefore not mentioned again. The secondary-side bridges (14, 16 to 18) are connected in series. In this manner a higher overall power output can be reached than the power output of each secondary-side bridge alone (if the secondary side is the output side). As a bidirectional converter system (or in inverted use, when the secondary side is the input side), this arrangement may help to spread the power over all winding pairs evenly.

Fig. 3 is a schematic illustration according to an aspect of a winding arrangement of the converter system 10 (for example of Fig. 1 or Fig. 2). The core 28 of the transformer 20 can be seen. Further, the first and second winding pair (22 and 24; shown by dashed line), alongside further winding pairs (below) can be seen (also shown by dots). The dashed-dotted line with the arrow 48 represents an axial direction which extends along a leg of the core 28. This may also be called axis of the core 28.

It can be seen that the corresponding primary-side and secondary-side windings of one winding pair are concentrically arranged around a same position along the axis 48. The different winding pairs are arranged in an axial direction to each other (displaced axially relative to each other). In Fig. 3, the primary-side winding of each winding pair is on the inside (radially closer to the core) while the secondary-side winding of each winding pair is on the outside. This is especially advantageous when the secondary side is of a higher voltage than the primary side (for example: primary side is LV, and secondary side is MV or HV) because the higher voltage needs more insulation. However, it is also possible to arrange the windings the other way around (primary side on the outside, and secondary side on the inside, and/or higher voltage on the inside).

The shown concentrical arrangement of windings of the same winding pair and axial arrangement of the different winding pairs allows the system to use less insulation between the winding pairs (in axial direction 48).

In Fig. 3, a transformer arrangement of the core type can be seen. It is also possible to use the shell-type arrangement. In Fig. 3, the windings are arranged around one leg (or limb (representing the vertical parts of the transformer)) of the core. The windings can also be arranged in two legs (in the shell type transformer also three legs).

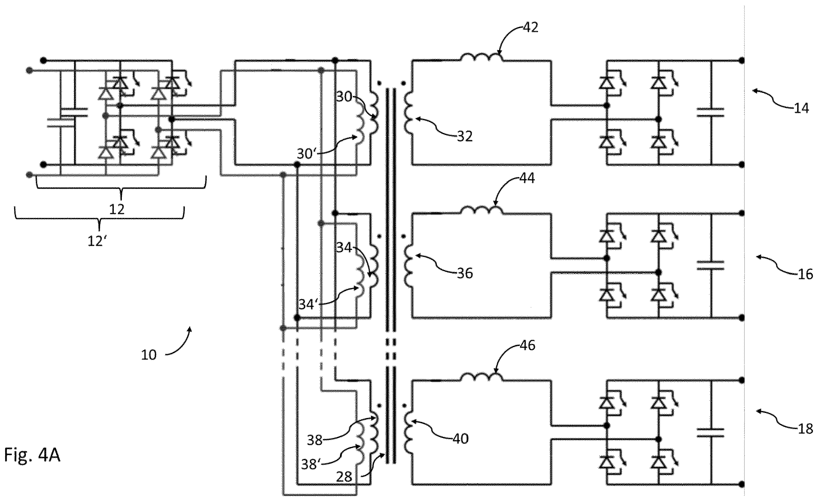

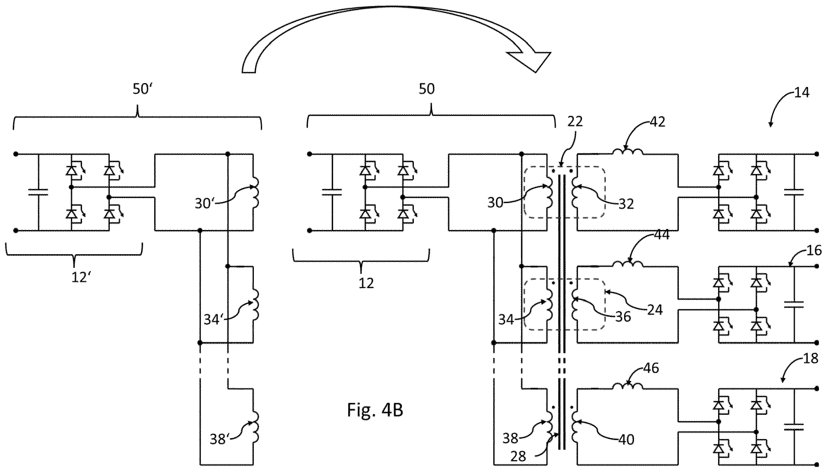

Figs. 4A and 4B show a schematic illustration according to another aspect of the converter system 10. The converter system 10 of Figs. 4A and 4B shows a converter system 10 with two primary side ports 50 and 50'. Also, three or more primary side ports are possible. Fig. 4A shows an overlay of the two primary side ports. For understanding purposes, Fig. 4B shows the two primary side ports separately, wherein the big arrow indicates that the windings of the second primary side port 50' are also wound around the one core 28 of the transformer 20. As can be seen in Fig. 4B, the primary side port 50 comprises the primary-side bridge 12 and the primary-side windings (30, 34, 38), connected in parallel, as described above. The second primary side port 50' may be identical to the first primary side port 50. It may have the same number of windings as the first primary side port 50. The second primary side port 50' comprises a second primary-side bridge 12', another first primary-side winding 30', another second primary-side winding 34', another n-th primary-side winding 38', and potentially further other primary-side windings (represented by the dotted lines).

Such a configuration with two, three, or more primary side ports may be used for electrical vehicle charging (or for other multiple electrical components). It allows multiple charging connections for multiple electrical vehicles. With a bidirectional converter system, it is possible to charge the vehicle(s) and/or use them as a storage for electrical energy from where energy might also be extracted for the power grid or other consumers.

In the converter system with two, three, or more primary side ports, the first and second winding pair may also be called first and second winding set or first and second winding group (and the following sets "third" and so on). Even though the term "pair" might not be perfectly fitting anymore (as three windings are comprised), the term is still maintained for consistency purposes.

Fig. 5 is a schematic illustration according to an aspect of how the windings can be interleaved. Fig. 5 shows a cross section through two interleaved windings. The two windings may be a primary-side winding and the corresponding other primary-side winding (like the first primary-side winding 30 and the other primary-side winding 30'; it could also be the second or n-th windings). Each box (surrounding a reference sign) represents a part of a conductor or one turn of a winding. The boxes with reference signs with a dash (': 51' to 58') represent a conductor of the other winding (like the other first primary-side winding 30'), while the boxes with reference signs without a dash (51 to 58) represent a conductor of the winding (like first primary-side winding 30).

An example in which both windings are wound in the same sense (clockwise or counterclockwise) would mean that: the one winding (represented by reference signs without a dash) is first wound on the left side of the first row (reference sign 51), then to the right side of the second row (reference sign 52), then to the left side of the third row (reference signs 53), and so on until it is finally wound to the right side of the bottom row (reference sign 58). At the same time the other winding (represented by reference signs with a dash) is first wound on the right side of the first row (reference sign 51'), then to the left side of the second row (reference sign 52'), then to the right side of the third row (reference signs 53'), and so on until it is finally wound to the left side of the bottom row (reference sign 58').

In another example, the one winding may be wound in the following order (order represented by reference sings in order): 51 -> 53 -> 55 -> 57 -> 58 -> 56 -> 54 -> 52. At the same time the other winding is wound in the following order: 52' -> 54' -> 56' -> 58' -> 57' -> 55' -> 53' -> 51'. Also, other interleaving patterns are possible. In the examples explained with reference to Fig. 5, only eight rows were provided. It is possible that more or less rows are present (and with that more or less than eight turns). If there are more than two primary side ports, there are also turns from more than two conductors (/windings) interleaved. It is possible to have more than two columns.

This other example may be obtained by arranging the two conductors (with dash and without dash) next to each other in an axial direction, so they together have the same radial length. With this overall conductor, a helical winding is wound, layer by layer, with an arbitrary number of layers, starting with the innermost layer (two layers are shown in the other example).

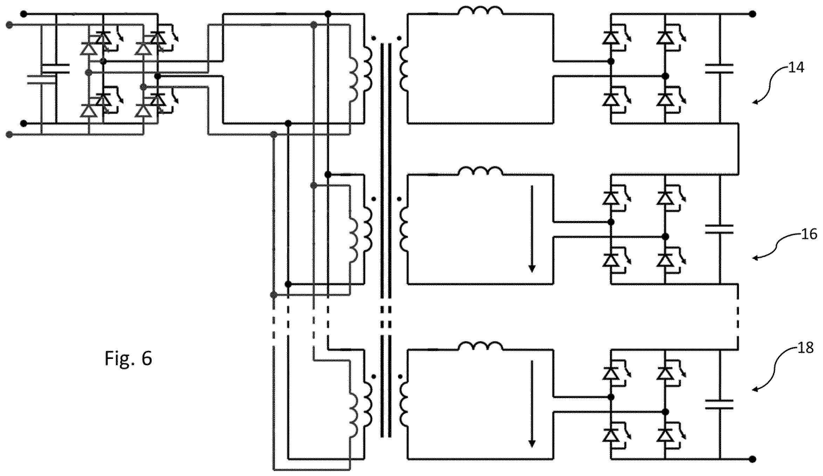

Fig. 6 is a schematic illustration according to an aspect of the converter system 10. It is largely similar to the converter system 10 of Fig. 4A. Similarities are therefore not mentioned again. The secondary-side bridges (14, 16 to 18) are connected in series. In this manner a higher overall power output can be reached than the power output of each secondary-side bridge alone (if the secondary side is the output side). As a bidirectional converter system (or in inverted use, when the secondary side is the input side), this arrangement may help to spread the power over all winding pairs evenly.

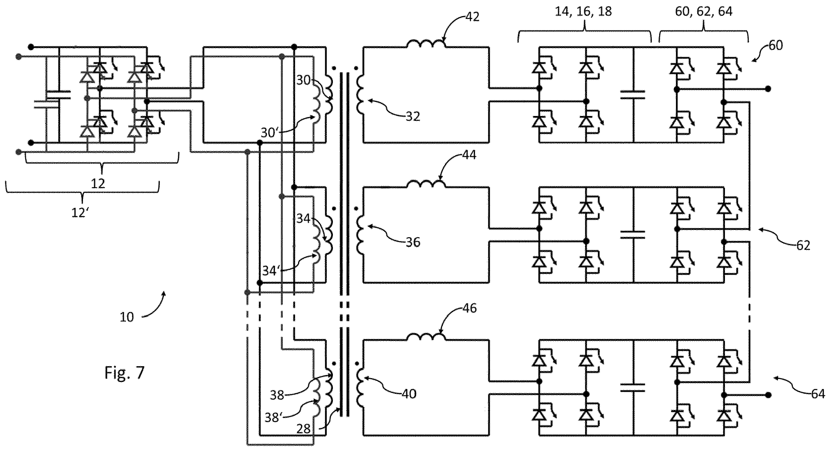

Fig. 7 is a schematic illustration according to an aspect of the converter system. It is largely similar to the converter system 10 of Fig. 4A. Similarities are therefore not mentioned again. The secondary-side bridges (14, 16 to 18) are each connected to a corresponding DC to AC converter (60, 62 to 64). The DC to AC converters are connected in series. The first secondary-side bridge 14 is connected to the first DC to AC converter 60, the second secondary-side bridge 16 is connected to the second DC to AC converter 62, the third secondary-side bridge 18 is connected to the third DC to AC converter 64. The output AC frequency of the DC to AC converters 60, and 62 to 64 may be different to the AC frequency of the transformer (and of the first primary-side bridge 12). The DC to AC converter 60 and 62 to 64 may be built in a similar way as the first primary-side bridge 12 or in a different way. Each secondary-side bridge and the corresponding AC to DC converter may share a capacitor. Fig. 7 shows a converter system 10 with two primary side ports. The aspect of Fig. 7 is also possible with only one primary-side port - as for example the converter system 10 of Fig. 1 with the DC to AC converters 60, and 62 to 64 added. The brackets in Fig. 7 for reference sings 14, 16, 18, and for 60, 62, 64 respectively, shall annotate the parts below the brackets. For reference sings 60, 62, 64, the corresponding parts are annotated a second time. The reference signs 14, 16, 18 are also already annotated in other figures.

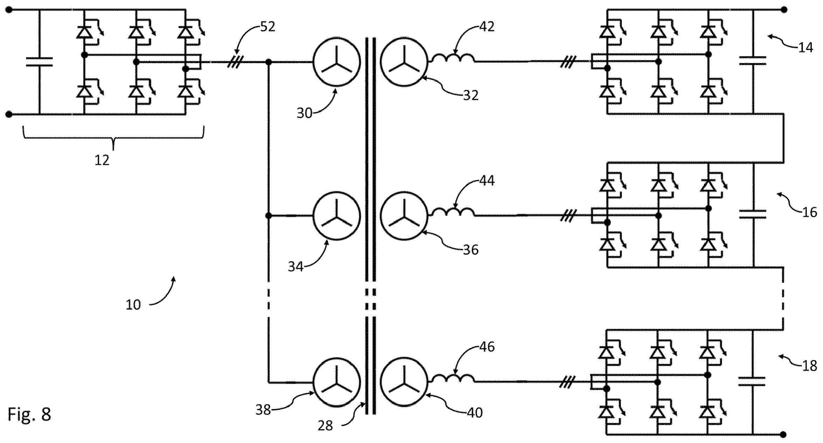

Fig. 8 is a schematic illustration according to an aspect of the converter system 10. In this aspect, the transformer is a three-phase transformer. The (first) primary-side bridge 12 converts a DC voltage and current to three phase shifted AC voltages and currents. The three separate connections from the primary-side bridge to each of the wiring three-sets (30, 34, 38; wiring three-set not to be confused with winding pair) are represented with the three tilted lines for simplicity (see reference sign 52). Each wiring three-set comprises three wirings for the three phases (wirings may also be called windings). These three wirings in a wiring three-set are represented in a simplified fashion. The different wirings for the different phases may be wound around (three) different legs of the core 28 (not especially shown in Fig. 8). Similarly, the secondary side has wiring three-sets (32, 36, 40) with three wirings each for the three phases. Each wiring of each of the wiring three-set is connected to a corresponding part of the corresponding secondary-side bridge (14, 16, 18). The secondary-side bridges comprise three different parts to convert the three different AC phases to one DC output (when the secondary side is the output side; bidirectional and/or reversed use is also possible). In Fig. 8, the secondary-side bridges are connected in series (similar as in Fig. 2). It is also possible that the secondary-side bridges are not connected (similar as in Fig. 1).

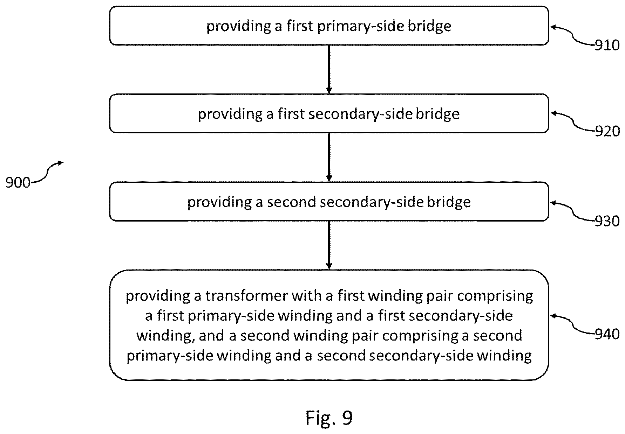

Fig. 9 is a flow chart of a method 900 according to an embodiment of the present disclosure. The method 900 may produce any of the preceding converter systems 10. In a first step 910 a first primary-side bridge 12 is provided. In a second step 920 a first secondary-side bridge 14 is provided. In a third step 930, a second secondary-side bridge 16 is provided. In a fourth step 940, a transformer 20 with a first winding pair 22 comprising a first primary-side winding 30 and a first secondary-side winding 32, and a second winding pair 24 comprising a second primary-side winding 34 and a second secondary-side winding 36 is provided. The first primary-side winding 30 and the second primary-side winding 34 are connected in parallel with the first primary-side bridge 12.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

### Reference signs:

- 10: converter system
- 12: (first) primary-side bridge
- 12': second primary-side bridge
- 14: first secondary-side bridge
- 16: second secondary-side bridge
- 18: n-th secondary-side bridge
- 20: transformer
- 22: first winding pair
- 24: second winding pair
- 26: n-th winding pair
- 28: core
- 30: first primary-side winding
- 30': other primary-side winding
- 32: first secondary-side winding
- 34: second primary-side winding
- 36: second secondary-side winding
- 38: n-th primary-side winding
- 40: n-th secondary-side winding
- 42, 44, 46: inductors
- 48: axis
- 50: first primary side port
- 50': second primary side port

## Claims

1. Converter system (10) comprising:
a first primary-side bridge (12);
a first secondary-side bridge (14);
a second secondary-side bridge (16); and
a transformer (20) with a first winding pair (22) comprising a first primary-side winding (30) and a first secondary-side winding (32), and a second winding pair (24) comprising a second primary-side winding (34) and a second secondary-side winding (36),
wherein the first primary-side winding (30) and the second primary-side winding (34) are connected in parallel with the first primary-side bridge (12),
wherein the first secondary-side winding (32) is connected to the first secondary-side bridge (14), and
wherein the second secondary-side winding (36) is connected to the second secondary-side bridge (16).

2. Converter system (10) according to claim 1, wherein a distance between a center of the first primary-side winding (30) and a center of the first secondary-side winding (32) is smaller than a distance between a center of the second primary-side winding (34) and the center of the first secondary-side winding (32).

3. Converter system (10) according to claim 1 or 2, wherein the first winding pair (22) is positioned in an axial direction (48) relative to the second winding pair (24), wherein the axial direction (48) extends along a leg of a core (28) of the transformer (20).

4. Converter system (10) according to claim 3, wherein an insulation distance between the first winding pair (22) and the second winding pair (24) in the axial direction (48) is smaller than an insulation distance between the first secondary-side winding (32) and the core (28) of the transformer (20), and/or smaller than an insulation distance between the first primary-side winding (30) and the first secondary-side winding (32).

5. Converter system (10) according to any one of claims 1 to 4, wherein the first primary-side winding (30) and the first secondary-side winding (32) are concentrically arranged around a same first position along an axis (48) of a core (28) of the transformer (20), and wherein the second primary-side winding (34) and the second secondary-side winding (36) are concentrically arranged around a same second position along the axis (48) of the core (28) of the transformer (20), wherein the axis (48) extends along a leg of the core (28) of the transformer (20).

6. Converter system (10) according to any one of claims 1 to 5, the converter system (10) further comprising an inductor (42, 44, 46) and/or capacitor connected in series with the first primary-side winding (30) or the first secondary-side winding (32).

7. Converter system (10) according to any one of claims 1 to 6, wherein the first winding pair (22) substantially corresponds to the second winding pair (24) in winding sense, number of turns, relative position between each primary-side winding and the corresponding secondary-side winding, and current running through the first primary-side winding (30) and the second primary-side winding (34).

8. Converter system (10) according to any one of claims 1 to 7, the converter system (10) further comprising:
a second primary-side bridge (12');
another first primary-side winding (30') comprised by the first winding pair (22); and
another second primary-side winding (34') comprised by the second winding pair (24);
wherein the another first primary-side winding (30') and the another second primary-side winding (34') are connected in parallel with the second primary-side bridge (12');
preferably wherein conductors of the first primary-side winding (30) and the another first primary-side winding (30') are interleaved.

9. Converter system (10) according to any one of claims 1 to 8, wherein a connection of a direct current, DC, side of the first secondary-side bridge (14) and second secondary-side bridge (16) is in medium voltage direct current, MVDC, and a connection of a DC side of the primary-side bridge (12) is in low voltage direct current, LVDC.

10. Converter system (10) according to any one of claims 1 to 8, wherein the first secondary-side bridge (14) is connected to a first direct current/alternating current, DC/AC, converter, and the second secondary-side bridge (16) is connected to a second DC/AC converter, wherein the first DC/AC converter and the second DC/AC converter are connected in series.

11. Converter system (10) according to any one of claims 1 to 10, wherein the transformer (20) is a medium-frequency transformer, MFT.

12. Converter system (10) according to any one of claims 1 to 11, wherein the transformer (20) is a three-phase transformer.

13. Converter system (10) according to any one of claims 1 to 9, and claims 11 and 12, wherein the first secondary-side bridge (14) and the second secondary-side bridge (16) are connected in series on a direct current, DC, side of the first secondary-side bridge (14) and the second secondary-side bridge (16).

14. Solid-state transformer in input-series output-parallel, ISOP, configuration or input-parallel output-series, IPOS, configuration comprising the converter system (10) of any one of claims 1 to 13.

15. Method of producing a converter system (10) comprising:
providing a first primary-side bridge (12);
providing a first secondary-side bridge (14);
providing a second secondary-side bridge (16); and
providing a transformer (20) with a first winding pair (22) comprising a first primary-side winding (30) and a first secondary-side winding (32), and a second winding pair (24) comprising a second primary-side winding (34) and a second secondary-side winding (36);
wherein the first primary-side winding (30) and the second primary-side winding (34) are connected in parallel with the first primary-side bridge (12);
wherein the first secondary-side winding (32) is connected to the first secondary-side bridge (14), and
wherein the second secondary-side winding (36) is connected to the second secondary-side bridge (16).
